# FASCICULE DE BREVET EUROPEEN

(11) **EP 0 891 699 B1**
(45) Date de publication et mention de la délivrance du brevet: **29.12.1999**
(21) Numéro de dépôt: 98440139.8
(22) Date de dépôt: 25.06.1998
(51) Int. Cl.: A01G 5/00, A01G 7/06

(54) **Procédé de coloration de végétaux vivants, en particulier de plantes ornementales vivantes par pulvérisation haute pression**
Verfahren zur Färbung von lebenden Vegetabilien, insbesondere lebenden Zierpflanzen, durch Hochdruckspritzen
Process for colouring living vegetals, particularly living ornamental plants, by high pressure spraying

(30) Priorité: 18.07.1997 FR 9709326
(43) Date de publication de la demande: 20.01.1999
(73) Titulaire: Badda, René, 67560 Rosheim (FR)
(72) Inventeur: Badda, René, 67560 Rosheim (FR)
(74) Mandataire: Nuss, Pierre

(56) Documents cités:
- WO-A-91/19416
- WO-A-96/05721
- AU-A- 1 692 488
- CH-A- 647 644
- DATABASE WPI Section Ch, Week 9205 Derwent Publications Ltd., London, GB; Class A97, AN 92-035879 [05] XP002060033 & JP 03 280814 A (DAINIPPON INK & CHEM KK; KAWAMURA RIKEN KK)

## Description

La présente invention concerne le domaine de la culture et des traitements de végétaux vivants, en particulier de plantes ornementales vivantes et vise à proposer un nouveau procédé de coloration de tels végétaux vivants, en particulier de plantes ornementales vivantes, notamment de "CALLUNA VULGARIS", par pulvérisation haute pression.

Il est, en effet, intéressant pour des producteurs de végétaux (horticulteurs, pépiniéristes...), notamment pour des raisons commerciales, de pouvoir disposer d'une gamme assez large de coloris pour chaque variété de leurs produits végétaux. Ceci leur permet, d'une part, de se démarquer de la concurrence en proposant de nouvelles couleurs ou nuances pour des plantes connues et, d'autre part, d'étendre leurs possibilités en matière de création artistique en introduisant, par exemple, de nouveaux effets dans des arrangements connus.

Ainsi, par exemple, dans les domaines, tels que la décoration florale, il est important de pouvoir offrir des produits dont les teintes correspondent aux teintes "à la mode" et qui varient d'une saison d l'autre. De même, il peut être utile de disposer d'un moyen de coloration de végétaux pour adapter, en le coloriant, un produit de base, aux différentes circonstances dans lesquelles il est susceptible d'être vendu au cours d'une saison. En effet, certaines circonstances ou événements sont marqués de manière plus ou moins stricte par un code des couleurs. On peut prendre comme exemple, un arrangement standard vendu en blanc, a l'occasion de mariages, naissances, etc., et qui pourra, après coloration, être vendu dans des teintes plus fantaisistes pour d'autres circonstances (anniversaires, fêtes annuelles, cérémonies, décorations...).

Pour les raisons invoquées ci-dessous, il est tout particulièrement intéressant de pouvoir proposer à sa clientèle des plantes possédant des couleurs originales et introuvables telles quelles dans la nature.

Les procédés de sélection, de croisement, d'hybridation etc.. répondent en partie à ce type de problème. Ils se différencient, cependant, de la présente invention dans la mesure où ces techniques créent des variétés nouvelles possédant, en général, tout un ensemble de caractéristiques nouvelles, dont la couleur n'est qu'un élément. Ces procédés sont en général très techniques donc complexes, longs et coûteux. De plus, il faut savoir que les résultats de ces procédés peuvent parfois être relativement aléatoires et n'apportent, de ce fait, pas toujours la ou les caractéristiques, par exemple, la couleur, espérée.

Pour répondre à ce problème technique, à savoir de pouvoir disposer de nouvelles couleurs pour des végétaux vivants, la demande de brevet WO 91/19416, présente un procédé de culture de plantes ornementales consistant à ajouter un colorant à une solution aqueuse puis à nourrir ces plantes avec cette solution, de telle manière, qu'elles absorbent cette dernière et qu'elles fixent le colorant dans leurs tissus. La coloration ou teinture de la plante est donc réalisée grâce a l'absorption, par la plante, du colorant au niveau des racines et grâce à la migration de celui-ci jusque dans les tissus externes visibles.

La demande WO 93/02546 divulgue quant à elle, un procédé et un appareillage destinés à faire pénétrer un liquide, éventuellement un liquide colorant, dans le système circulatoire de plantes, par injection dudit liquide dans la tige. Le procédé décrit dans cette publication présente, cependant, l'inconvénient majeur d'êntre difficile et donc peu économique à mettre en oeuvre, puisqu'il implique d'injecter individuellement à chaque plante la ou les doses de colorants nécessaires. Comme dans la demande WO 91/19416 précitée, ce procédé colore la plante dans son ensemble, c'est-à-dire sans faire de distinction entre les différentes parties (tiges, branches, feuilles, fleurs, bourgeons...) de cette deinière. Ici aussi, le colorant est censé migrer de l'endroit d'injection jusqu'aux extrémités des fleurs, ce qui donne un aspect à la fois inesthétique et artificiel aux produits obtenus par le biais de ces deux techniques. De plus, il faut, pour obtenir un effet de coloration à la fois satisfaisant et durable, fournir aux végétaux à traiter, soit une alimentation continue en colorant, comme dans le cas de la première demande, soit une succession d'injections de doses plus ou moins concentrées en colorant et à des fréquences plus ou moins élevées. Ceci implique un suivi continu de l'état de chaque plante sur une période qui peut être plus ou moins longue et engage donc des frais matériels et humains importants.

La demande WO 96/05721 décrit un procédé perfectionné de distribution externe d'une quantité efficace de substances chimiques à des plantes par pulvérisation sur des tissus non ligneux. En ce qui concerne ce procédé de pulvérisation, on peut noter que le problème d'une coloration non sélective, et donc synonyme d'un aspect artificiel du produit final, subsiste dans ce procédé. De plus, une telle application de colorant ne produit pas toujours un résultat homogène, dans la mesure où, la pulvérisation se faisant par le dessus, seules les parties supérieures et bien exposées des plantes sont colorées de manière efficace. Au problème d'homogénéité de la répartition du colorant pulvérisé s'ajoute celui de la durabilité dans le temps de la coloration obtenue. En effet, les colorations obtenues par ce type de procédé ne sont généralement pas durables.

En l'occurrence, ce type de coloration ne résiste généralement que peu ou pas du tout à l'humidité donc en particulier, aux intempéries auxquelles les plantes sont soumises. Ceci est particulièrement gênant pour les végétaux, plantes ou fleurs destinés à l'extérieur, par exemple, pour des jardins publics, balcons, terrasses etc., et qui sont exposés aux précipitations habituelles (pluie, neige, brume, rosée...).

Les colorations sont parfois si peu résistantes que même des fleurs d'intérieur perdent leurs couleurs lorsque l'air qui les environne est trop humide. Il en est ainsi, par exemple, lorsque de telles fleurs sont placées, dans des endroits humides (salle de bain, cuisine...). De même, l'arrosage et l'entretien de ces plantes peuvent facilement leur faire perdre leurs couleurs, au risque en particulier, de tâcher l'utilisateur ou l'endroit dans lequel ces plantes se trouvent (sol, tapis, moquette...).

Pour finir, il convient d'observer que les colorants et teintures tels que mis en oeuvre dans les procédés connus jusqu'à présent sont, en majeure partie, relativement mal tolérés par les plantes traitées. Ainsi, certains de ces procédés de l'état de la technique entravent de manière non négligeable la croissance des plantes coloriées, de sorte qu'elles ne se développent pratiquement plus ou plus du tout après un tel traitement. Pire encore, certaines de ces techniques sont si nocives pour les plantes vivantes traitées, qu'une part importante, sinon la totalité des produits obtenus, meure après une courte période.

On connaît également, par JP-A-03 28 0814, un procédé de coloration des inflorescences des végétaux consistant à pulvériser une solution d'agent colorant sur des plantes. Cependant, ce document prévoit une simple pulvérisation, qui est généralement effectuée à une pression n'excédant pas 5 bars, de sorte que la pérennité de ladite coloration ne peut être assurée, l'agent colorant propulsé sur les plantes ne pouvant pénétrer dans les tissus de ces dernières, en particulier dans les tissus des inflorescences. Il en résulte que la tenue de la coloration dans le temps ne peut être assurée.

Le but du procédé objet de la présente invention est d'apporter une solution aux problèmes décrits ci-dessus et soulevés par l'état actuel de la technique. Il s'agit par conséquent, de procurer un procédé de coloration de végétaux vivants qui soit d la fois efficace, peu coûteux et simple à mettre en oeuvre sur le plan industriel. La coloration obtenue par ce procédé doit être esthétique, naturelle, homogène et durable, c'est-à-dire, stable et indélébile.

Contrairement aux méthodes d'hybridation et analogues, il n'est pas question ici de créer une variété nouvelle sur la base des variétés déjà existantes, mais bien de "colorier" des végétaux vivants pris tels quels en appliquant le procédé objet de la présente invention.

Au sens de la présente invention, les termes dérivés du verbe colorier (coloration, coloriage...) ne désignent donc pas une simple opération de recouvrement global, de masquage ou de maquillage de l'ensemble (tiges, feuilles, fleurs...) de la plante concernée mais bien une coloration sélective de l'inflorescence de ces plantes, a l'exception de toutes les autres parties (feuilles vertes, épines, tiges...) qui gardent pratiquement leurs couleurs d'origine. Ce point est capital pour deux raisons. Premièrement, la notion de coloration sélective est importante pour l'aspect final du produit colorié, qui doit être le plus proche possible de celui qu'aurait la plante si elle existait telle quelle dans la nature. Deuxièmement, il s'agit aussi de préserver, au mieux, la bonne santé des plantes traitées, notamment en prenant soin de perturber le moins possible leurs échanges cellulaires (respiration, nutrition, photosynthèse...).

Les végétaux traités selon l'invention présentent, par conséquent, une coloration de l'inflorescence ayant l'air parfaitement naturelle puisque les feuilles. tiges et toutes les autres parties qui ne doivent pas être coloriées, restent dans leurs teintes originelles.

De plus, le procédé mis en oeuvre selon l'invention n'affecte en rien la santé des plantes traitées. Celles-ci restent vivantes, et possèdent un rythme de croissance, un développement (taille et poids) et une longévité identiques à ceux d'une plante témoin non traitée. Il est à noter que les parties qui pousseront après un premier traitement de coloration ne seront bien sûr pas coloriées mais auront la couleur naturelle de la plante, ce qui permet d'obtenir une série d'effets nouveaux de couleurs, notamment des mélanges bicolores, des dégradés, etc. Une seconde application du procédé à ce stade permet de colorier les nouvelles fleurs de la même couleur, ou non, que la plante déjà coloriée.

Par exemple, une plante de couleur naturelle blanche peinte la première fois, par exemple, en jaune et ayant, grandi peut avoir ses nouvelles fleurs soit:
- laissées telles quelles (plante bicolore : fleurs jaunes, fleurs blanches),
- peintes en jaune (fleurs entièrement jaune avec/sans dégradés) par une ou plusieurs applications supplémentaires en jaune.
- peintes en une autre couleur que le jaune. Avec du rose, par exemple, la plante sera bicolore (jaune+rose=orange pour les fleurs surpeintes et rose pour les nouvelles fleurs). Selon les intensités et couleurs utilisées lors des différentes applications, on peut obtenir une large gamme continue de coloris et une nouvelle palette d'effets inédits.

Cet exemple laisse deviner les possibilités que peut offrir le procédé. objet de la présente invention, en ce qui concerne les combinaisons de différentes couleurs ou effets de couleurs, que l'on peut réaliser sur une plante et ses différentes fleurs. Ainsi, plusieurs applications successives du procédé, objet de la présente invention, avec des couleurs différentes et compatibles, permettent de multiplier, quasiment à l'infini, le nombre de coloris et d'effets que l'on peut obtenir avec cette technique. Il est bien entendu également possible, par une ou plusieurs applications suivant une première coloration, de renforcer la teinte de cette première application et/ou de colorier les nouvelles fleurs apparues entretemps.

Un autre avantage capital réside dans le caractère parfaitement indélébile de la coloration obtenue par le procédé de la présente invention. Ainsi, et ceci est tout particulièrement appréciable pour des plantes destinées à un usage extérieur (jardins, balcons, terrasses, tombes...), la coloration résiste très bien aux intempéries qui impliquent des taux d'humidité élevés (brouillard, brume, rosée...) ou aux précipitations (averses) usuelles, susceptibles de délaver les plantes traitées. Même, dans des conditions climatiques plus sévères (orages, grêle, neige...) les plantes traitées gardent leurs colorations. Ce qui est vrai pour les plantes destinées à l'extérieur et encore plus vrai pour des plantes dites "d'intérieur". La coloration de telles plantes résiste particulièrement bien aux endroits humides (salle de bain, cuisine...) et aux opérations courantes d'entretien et d'arrosage.

Encore un avantage du procédé de la présente invention est d'être facile à mettre en oeuvre sur le plan industriel, dans la mesure où il pourrait, pour le moins en partie et d'une manière simple, être automatisé.

Le procédé conforme à la présente invention consiste à appliquer, sous haute pression, à des végétaux vivants, par l'intermédiaire d'un moyen de pulvérisation haute pression raccordé à un moyen de compression et travaillant à une pression comprise entre 100 et 150 bars, de préférence 140 bars, une peinture hydrodiluable et indélébile après séchage. Cette peinture hydrodiluable et indélébile peut, notamment, être établie sur une base de résine copolymère acrylique et de pigments colorés.

Le procédé appliqué selon l'invention est caractérisé en ce qu'il consiste à appliquer par balayage, sur les végétaux vivants précités, une peinture hydrodiluable, par exemple, une peinture établie sur une base de résine copolymère acrylique et de pigments colorés par l'intermédiaire d'un moyen de pulvérisation haute pression raccordé à un moyen de compression haute pression.

Ces moyens de pulvérisation et de compression haute pression peuvent, par exemple, être un pistolet haute pression, respectivement une pompe haute pression. Le pistolet peut avantageusement être muni d'une buse à jet large.

L'application de la peinture peut être faite en une ou plusieurs étapes de balayages réguliers et successifs sur les plantes. Par exemple, lorsqu'on effectue deux balayages réguliers et successifs, on peint d'abord une face des plantes à traiter puis, dans le second balayage, l'autre face non peinte.

Le balayage est effectué à une distance comprise, de préférence, entre 40 cm et 50 cm desdits végétaux, à une température comprise, de préférence, entre 5°C et 35°C. La pression sous laquelle on applique la peinture doit être comprise entre 100 bars et 150 bars. Une pression d'environ 140 bars convient particulièrement bien.

Les résultats seront d'autant plus satisfaisants si l'on prend garde que les végétaux à traiter soient parfaitement secs, bien fleuris et disposés, de préférence, de telle manière que les plantes ne se touchent pas entre-elles.

Dans un autre mode de mise en oeuvre du procédé, objet de la présente invention, on peut prévoir que l'application de la peinture sur les plantes se fait en au moins deux étapes de balayages.

La ou les étape(s) supplémentaires d'application est/sont réalisée(s) dans les mêmes conditions opératoires que ci-dessus, sur la ou les faces non traitée(s) par la ou les applications précédentes.

Après la ou les étapes de balayages suit une phase de séchage au cours de laquelle on laisse sécher le produit. Cette dernière peut durer, de préférence entre 30 minutes et 60 minutes, selon les conditions de température et d'humidité auxquelles le produit est exposé durant le séchage.

A titre d'exemple non limitatif, le procédé selon la présente invention s'applique à des plantes vivantes, en particulier à des "CALLUNA VULGARIS". Ces "CALLUNA VULGARIS" peuvent être de couleur rouge, rose ou blanche, de préférence, de couleur blanche, c'est-à-dire que les fleurs des "CALLUNA VULGARIS" en question seront blanches, ou majoritairement blanches, et de préférence arrivées a maturité.

Les "CALLUNAS VULGARIS" précitées sont d'abord soumises à une pulvérisation, sous une pression d'environ 140 bars, conformément au mode de mise en oeuvre décrit ci-dessus, au moyen d'une pompe TITAN Epic 660ex (pression max. : 210 bars, débit max. : 2.25 l/min.), associée à un pistolet haute pression TITAN LX-80 (pression : 257 bars) avec inverseur SC-4, filtre et raccord tournant, commercialisés par la société TITAN, une peinture hydrodiluable établie sur une base de résine copolymère acrylique et de pigments colorés, d'une densité d'environ 1,05 ± 0,05 et d'une viscosité de 19 ± 5 s (Test AFNOR sur une coupe "Ford NF-4" à 20°C). par exemple, une peinture choisie parmi les références commerciales S 572.303, S 572.625 ou S 572.750 de la société SCHREIBER INDUSTRIES S.A.

On pourra choisir comme couleurs pour cette peinture notamment entre les teintes suivantes: le jaune, le bleu, le rose, le rose-violet et de manière générale toute autre couleur, teinte, mélange ou nuance de couleurs que l'on jugera utile, et qui soit compatible avec le procédé de l'invention.

Le produit obtenu est ensuite laissé a' sécher pendant environ 60 minutes à une température d'environ 10°C et sous une humidité relative d'environ 55%.

On évitera un traitement dans des conditions où l'humidité de l'air est trop importante, par exemple tard le soir, en cas de brume, ou tôt le matin, en cas de rosée matinale, les plantes séchant alors mal, ce qui conduirait à un résultat peu satisfaisant.

Un caractère très avantageux et propre aux "CALLUNAS VULGARIS" est que l'aspect de telles plantes traitées par le procédé de coloration, objet de la présente invention, ne dépend que peu de la santé de la plante traitée. De ce fait, une plante traitée et morte, par exemple, suite à un défaut d'arrosage ou à un mauvais entretien, gardera un aspect très proche de celui de la plante traitée et restée vivante.

Ce cas particulier ne doit pas laisser sous-entendre que la plante meure ou pourrait mourir après un traitement de coloration, à cause de ce traitement de colorarion. Bien évidemment, la coloration ne rend pas les plantes colorées immortelles, ces dernières pouvant dépérir, notamment, suite à un mauvais entretien. Il convient simplement d'insister sur le fait que le procédé. objet de la présente invention, ne nuit aucunement à la santé ou au développement ultérieur des plantes ainsi traitées.

Bien entendu, l'invention n'est pas limitée au mode de réalisation décrit. Des modifications restent possibles, notamment du point de vue de la constitution des divers éléments ou par substitution d'équivalents techniques, sans sortir pour autant du domaine de protection de l'invention.

## Revendications

1. Procédé de coloration de végétaux vivants par pulvérisation, caractérisé en ce qu'il consiste à appliquer, sous haute pression, à des végétaux vivants, par l'intermédiaire d'un moyen de pulvérisation haute pression raccordé à un moyen de compression et travaillant à une pression comprise entre 100 et 150 bars, de préférence 140 bars, une peinture hydrodiluable et indélébile après séchage.

2. Procédé, selon la revendication 1, caractérisé en ce qu'il consiste à laisser sécher les produits obtenus après application de la peinture.

3. Procédé, selon la revendication 1, caractérisé en ce que le moyen de pulvérisation est un pistolet haute pression muni d'une buse à jet large.

4. Procédé, selon la revendication 3, caractérisé en ce que le moyen de pulvérisation est un pistolet haute pression du type TITAN LX-80 avec inverseur SC-4, filtre et raccord tournant, commercialisés par la société TITAN.

5. Procédé, selon la revendication 1, caractérisé en ce que le moyen de compression est une pompe.

6. Procédé, selon la revendication 5, caractérisé en ce que la pompe est une pompe du type TITAN Epic 660ex, commercialisée par la société TITAN.

7. Procédé, selon la revendication 1, caractérisé en ce que la peinture hydrodiluable appliquée est une peinture établie sur une base de résine copolymère acrylique et de pigments colorés.

8. Procédé, selon la revendication 7, caractérisé en ce que la peinture hydrodiluable utilisée présente une densité d'environ 1,05 ± 0,05.

9. Procédé, selon la revendication 7 ou 8, caractérisé en ce que la peinture hydrodiluable utilisée présente une viscosité de 19 ± 5 s mesuré suivant Test AFNOR sur une coupe "Ford NF-4" à 20°C.

10. Procédé, selon l'une quelconque des revendications 7 à 9, caractérisé en ce que la peinture hydrodiluable utilisée est une peinture du type commercialisée par la société SCHREIBER INDUSTRIES S.A. sous les références S 572.303, S 572.625, ou S 572.750.

11. Procédé, selon la revendication 1, caractérisé en ce que la peinture est appliquée par balayages réguliers et successifs aux végétaux vivants. et en ce que l'on laisse sécher le produit obtenu.

12. Procédé, selon les revendications 1 et 11, caractérisé en ce qu'après le premier balayage régulier, au moins un balayage régulier supplémentaire est effectué dans les mêmes conditions opératoires, sur la ou les face(s) non traitée(s) par le ou les balayage(s) précédent(s) des végétaux vivants, et en ce que l'on laisse sécher le produit obtenu.

13. Procédé, selon la revendication 11 ou 12, caractérisé en ce que les balayages s'effectuent a' une distance des végétaux comprise, de préférence, entre 40 cm et 50 cm.

14. Procédé, selon l'une quelconque des revendications 11 à 13, caractérisé en ce que les balayages s'effectuent a' des températures comprises, entre 5°C et 35°C.

15. Procédé, selon l'une quelconque des revendications 2, 11, et 12, caractérisé en ce que le temps de séchage du produit final est compris, entre 30 minutes et 60 minutes, selon les conditions de température et d'humidité auxquelles ledit produit est exposé durant cette phase de séchage.

16. Procédé, selon les revendications 1 à 15, caractérisé en ce que les végétaux utilisés ont un feuillage parfaitement sec.

17. Procédé, selon les revendications 1 à 16, caractérisé en ce que les végétaux utilisés sont des plantes ornementales vivantes en fleurs.

18. Procédé, selon les revendications 1 à 17, caractérisé en ce que les végétaux vivants utilisés sont des plantes appartenant à la famille des éricacées.

19. Procédé, selon les revendications 1 à 18, caractérisé en ce que les végétaux vivants utilisés sont du type "CALLUNA VULGARIS".

## Claims

1. Process for colouring living vegetals by spraying, characterised in that it involves applying, under high pressure, a water-diluable paint which is indelible after drying to living vegetals using a high pressure sprayer connected to a compression means and operating at a pressure of between 100 and 150 bar, preferably 140 bar.

2. Process according to claim 1, characterised in that it involves leaving the products obtained to dry after application of the paint.

3. Process according to claim 1, characterised in that the sprayer is a high pressure gun equipped with a wide jet nozzle.

4. Process according to claim 3, characterised in that the sprayer is a high pressure gun of the TITAN LX-80 type with SC-4 inverter, filter and rotating connector, sold by the company TITAN.

5. Process according to claim 1, characterised in that the compression means is a pump.

6. Process according to claim 5, characterised in that the pump is a pump of the TITAN Epic 660ex type sold by the company TITAN.

7. Process according to claim 1, characterised in that the water-diluable paint applied is a paint made up on a base of acrylic copolymer resin and coloured pigments.

8. Process according to claim 7, characterised in that the water-diluable paint used has a density of about 1.05 ± 0.05.

9. Process according to claim 7 or 8, characterised in that the water-diluable paint used has a viscosity of 19 ± 5 s measured by the AFNOR test on a "Ford NF-4" cup at 20°C.

10. Process according to any one of claims 7 to 9, characterised in that the water-diluable paint used is a paint of the type sold by the company SCHREIBER INDUSTRIES S.A. under references S 572.303, S 572.625 or S 572.750.

11. Process according to claim 1, characterised in that the paint is applied to the living vegetals by regular successive sweeping operations and in that the product obtained is left to dry.

12. Process according to claims 1 and 11, characterised in that, after the first regular sweeping operation, at least one additional regular sweeping operation is carried out under the same operating conditions on the face(s) not treated by the preceding sweeping operation(s) on the living vegetals and in that the product obtained is left to dry.

13. Process according to claim 11 or 12, characterised in that the sweeping operations are carried out at a distance from the vegetals which is preferably between 40 cm and 50 cm.

14. Process according to any one of claims 11 to 13, characterised in that the sweeping operations are carried out at temperatures between 5°C and 35°C.

15. Process according to any one of claims 2, 11 and 12, characterised in that the drying time for the final product is between 30 minutes and 60 minutes, depending on the temperature and humidity conditions to which said product is exposed during this phase of drying.

16. Process according to claims 1 to 15, characterised in that the vegetals used have perfectly dry foliage.

17. Process according to claims 1 to 16, characterised in that the vegetals used are living ornamental plants in bloom.

18. Process according to claims 1 to 17, characterised in that the living vegetals used are plants belonging to the ericaceous family.

19. Process according to claims 1 to 18, characterised in that the living vegetals used are of the "CALLUNA VULGARIS" type.

## Patentansprüche

1. Verfahren zur Färbung von lebenden Pflanzen durch Zerstäubung, **dadurch gekennzeichnet**, daß es darin besteht, unter Hochdruck auf lebende Pflanzen mit Hilfe eines Hochdruckzerstäubungsmittels, das an ein Kompressionsmittel angeschlossen ist und das bei einem Druck zwischen 100 und 150 bar und vorzugsweise 140 bar funktioniert, eine wasserverdünnbare und nach dem Trocknen nicht entfernbare Farbe aufzubringen.

2. Verfahren nach Anspruch 1, dadurch gekennzeichnet, daß es darin besteht, die nach Auftragung der Farbe erhaltenen Produkte trocknen zu lassen.

3. Verfahren nach einem der Ansprüche 1, dadurch gekennzeichnet, daß das Zerstäubungsmittel eine mit einer Breitstrahldüse versehene Hochdruckpistole ist.

4. Verfahren nach Anspruch 3, dadurch gekennzeichnet, daß das Zerstäubungsmittel eine Hochdruckpistole vom Typ TITAN LX-80 mit Umschalter SC-4, Filter und Drehanschluß ist, die von der Firma TITAN vertrieben wird.

5. Verfahren nach Anspruch 1, dadurch gekennzeichnet, daß das Kompressionsmittel eine Pumpe ist.

6. Verfahren nach Anspruch 5, dadurch gekennzeichnet, daß die Pumpe eine Pumpe vom Typ TITAN Epic 660ex ist, die von der Firma TITAN vertrieben wird.

7. Verfahren nach Anspruch 1, dadurch gekennzeichnet, daß die wasserverdünnbare Farbe auf einer Basis von Acryl-Copolymer-Harz und Farbpigmenten hergestellt wird.

8. Verfahren nach Anspruch 7, dadurch gekennzeichnet, daß die verwendete wasserverdünnbare Farbe eine Dichte von ungefähr 1,05 +/- 0,05 aufweist.

9. Verfahren nach Anspruch 7 oder 8, dadurch gekennzeichnet, daß die verwendete wasserverdünnbare Farbe eine Viskosität von 19 +/- 5 s (AFNOR-Test an einem Ausschnitt "Ford NF-4" bei 20°C) aufweist.

10. Verfahren nach einem der Ansprüche 7 bis 9, dadurch gekennzeichnet, daß die verwendete wasserverdünnbare Farbe beispielsweise eine von der Firma SCHREIBER INDUSTRIES S.A. unter den Referenzen S 572.303, S 572.625 oder S 572.750 vertriebene Farbe ist.

11. Verfahren nach den Ansprüchen 1, dadurch gekennzeichnet, daß die Farbe durch regemäßige und aufeinanderfolgende Spülungen auf die lebenden Pflanzen aufgetragen wird und daß das erhaltene Produkt trocknen gelassen wird.

12. Verfahren nach Anspruch 1 und 11, dadurch gekennzeichnet, daß nach der ersten regelmäßigen Spülung mindestens eine zusätzliche regelmäßige Spülung unter denselben Durchführungsbedingungen auf die durch die vorhergehende(n) Spülung(en) nicht behandelte(n) Fläche(n) der lebenden Pflanzen durchgeführt wird und daß das erhaltene Produkt trocknen gelassen wird.

13. Verfahren nach Anspruch 11 oder 12, dadurch gekennzeichnet, daß die Spülungen in einem Abstand von den Pflanzen zwischen vorzugsweise 40 cm und 50 cm erfolgen.

14. Verfahren nach einem der Ansprüche 11 bis 13, dadurch gekennzeichnet, daß die Spülungen bei Temperaturen zwischen 5°C und 35°C erfolgen.

15. Verfahren nach einem der Ansprüche 2, 11 und 12, dadurch gekennzeichnet, daß die Trocknungszeit für das Endprodukt zwischen 30 Minuten und 60 Minuten liegt, je nach den Temperatur- und Feuchtigkeitsbedingungen, denen das Produkt während dieser Trocknungsphase ausgesetzt ist.

16. Verfahren nach den Ansprüchen 1 bis 15, dadurch gekennzeichnet, daß die verwendeten Pflanzen vollkommen trockene Blätter aufweisen.

17. Verfahren nach den Ansprüchen 1 bis 16, dadurch gekennzeichnet, daß die verwendeten Pflanzen lebende Zierpflanzen in Blüte sind.

18. Verfahren nach den Ansprüchen 1 bis 17, dadurch gekennzeichnet, daß die verwendeten lebenden Pflanzen Pflanzen sind, die der Familie der Heidekrautgewächse angehören.

19. Verfahren nach den Ansprüchen 1 bis 18, dadurch gekennzeichnet, daß die verwendeten lebenden Pflanzen vom Typ "CALLUNA VULGARIS" sind.
